# FASCICULE DE BREVET EUROPEEN

(11) **EP 3 144 583 B1**
(45) Date de publication et mention de la délivrance du brevet: **07.11.2018**
(21) Numéro de dépôt: 16188854.0
(22) Date de dépôt: 14.09.2016
(51) Int. Cl.: F21V 31/03, F21S 45/00

(54) **PROJECTEUR DE VÉHICULE À SYSTÈME D AÉRATION**
FAHRZEUGSCHEINWERFER MIT BELÜFTUNGSSYSTEM
VEHICLE HEADLIGHT WITH AERATION SYSTEM

(30) Priorité: 18.09.2015 FR 1558807
(43) Date de publication de la demande: 22.03.2017
(73) Titulaire: PSA Automobiles SA, 78300 Poissy (FR); VALEO VISION, 93012 Bobigny Cedex (FR)
(72) Inventeur: Molto, Valerie, 78000 VERSAILLES (FR); Fernández Carcelén, Francisco, 23700 Linares (ES); Ochoa Ibáñez, Ana Maria, 23600 Martos (ES); Gómez Ramírez, Manuel, 23006 Jaén (ES); Sánchez Medina, Jose Manuel, 23600 Martos (ES); Romero, Nuria, 23006 Jaén (ES)

(56) Documents cités:
- DE-A1- 10 135 849
- DE-A1- 10 139 818

## Description

### DOMAINE TECHNIQUE

L'invention se rapporte à un projecteur de véhicule équipé d'un système d'aération permettant d'empêcher une condensation d'humidité ou un échauffement important de l'air à l'intérieur du boitier qui loge le projecteur.

En application principale, mais non exclusive, l'invention concerne le domaine des véhicules automobiles, dont les projecteurs sont parfois dans un environnement humide (pluie, brouillard ou lavage) et doivent pouvoir évacuer rapidement l'humidité qui est entrée dans leur boitier. En effet, les boitiers des projecteurs ne peuvent pas être totalement étanches du fait des variations de température dues aux passages marche-arrêt des projecteurs qui entraînent une variation de pression à absorber. De plus, les variations de température à l'arrêt provoquent la condensation de la vapeur d'eau sur la glace.

Les boitiers de projecteurs disposent donc en général d'une ouverture d'air placée à l'abri de l'eau. Cependant les entrées d'humidité et d'eau dans ces boitiers restent difficiles à éliminer et des solutions ont été proposées pour mettre en place une ventilation adaptée.

### ÉTAT DE LA TECHNIQUE

Il est connu de ventiler l'intérieur du boitier de projecteurs en aménageant une entrée et une sortie d'air dans le boitier. Une telle solution est par exemple présentée dans le document de brevet DE 10026487 et comporte une admission d'air et une sortie d'air en positions diamétralement opposées, agencées dans le boitier des projecteurs d'un véhicule automobile. Les positions d'admission et de sortie de l'air sont ainsi réparties pour former un passage grâce à la création d'un différentiel de pression d'air lorsque le véhicule se déplace. Mais lorsque le véhicule est à l'arrêt, le différentiel de pression est annulé alors que, simultanément, une baisse de température et une condensation en particulier sur la vitre du projecteur apparaissent. De plus, pour créer un différentiel de pression entre l'entrée d'air et la sortie d'air, l'entrée est agencée à l'avant du projecteur, du côté extérieur au véhicule, ce qui peut conduire à une entrée d'eau inopportune dans le projecteur. Un autre inconvénient provient de la difficulté de circulation de l'air dans le boitier du projecteur qui contient en général des pièces gênant le passage du flux d'air.

Une autre solution est présentée dans le document de brevet DE 20 2012 009488, qui décrit également une circulation d'air « en biais », créée par un différentiel de pression formé entre une entrée - agencée en zone avant d'un côté du boîtier - et de la sortie disposée en zone arrière du côté opposé. L'entrée d'air est protégée derrière un élément de carrosserie, la sortie étant recourbée vers l'arrière pour éviter l'entrée d'eau ou de poussières. Mais cette solution présente des inconvénients semblables à ceux de la solution précédente : risque d'entée d'eau dans le boitier par une ouverture orientée vers l'extérieur, une absence de circulation d'air à l'arrêt, et la présence de pièces internes au boitier qui entravent la circulation de l'air. DE 101.35.849 divulgue un projecteur selon le préambule de la revendication 1.

### EXPOSÉ DE L'INVENTION

L'invention vise à optimiser la circulation d'air dans le boîtier tout en éliminant tout risque d'entrée d'eau. Pour ce faire, l'invention prévoit un guidage de l'air selon un parcours adaptable à son environnement pour le conduire vers la glace du projecteur.

A cet effet, la présente invention a pour objet un projecteur selon la revendication 1.

On entend par « conduit » un guide creux, étanche à l'air, et qui permet de conduire l'air dans un alésage. Selon l'invention, ce conduit permet d'amener de l'air jusqu'à la glace du projecteur même en présence d'obstacles internes - en particulier des réflecteurs ou des sources de lumières - qui briseraient les déplacements d'air libre à l'intérieur du boitier du projecteur. Un autre avantage réside dans le fait que les orifices de ventilation ne sont pas positionnés sur la glace, ce qui permet de ne pas exposer ces ouvertures au risque d'entrée d'eau.

Le qualificatif « flexible » désigne la capacité d'un matériau à pouvoir se courber, sans se rompre, dans une amplitude de déformation adaptée à l'utilisation visée.

Selon des modes de mise en oeuvre préférés :
- le conduit présente une entrée d'air couplée à l'orifice de ventilation et au moins une sortie d'air, une ou la sortie d'air étant placée à proximité immédiate de la glace, l'expression « à proximité immédiate » signifiant au plus près compte tenu des contraintes technologiques;
- le couplage entre l'orifice de ventilation et l'entrée d'air est étanche, un couplage étanche étant en particulier réalisé par emmanchement du conduit sur un embout formé sur un bloc de ventilation;
- le matériau flexible dont est constitué le conduit est une matière plastique flexible choisie parmi les élastomères thermoplastiques (dits TPE), le polypropylène, le polyéthylène et le polychlorure de vinyle;
- le conduit présente au moins un coude de contournement d'une pièce interne au boitier, la pièce contourné pouvant être un emplacement de source lumineuse ou un habillage fixé sur la face interne du boitier, le conduit contournant l'habillage;
- le conduit vient s'emmancher partiellement dans un embout présentant une ouverture et venant d'une paroi de l'habillage de sorte que l'air soit dirigé depuis l'ouverture de l'embout vers la glace;
- l'orifice d'entrée d'air de ventilation est agencé dans une zone en dépression du boîtier, en particulier au niveau inférieur, de sorte que l'air puisse être aspiré lors du roulage du véhicule;
- le conduit est intégré en prolongement d'une pièce du boitier, en particulier en prolongement d'un réflecteur de lumière, alternativement le conduit est indépendant des autres pièces internes au boitier du projecteur ;
- la section du conduit est sensiblement constante ou, au moins en partie, décroissante le long du conduit creux ou au moins en partie décroissante le long du conduit;
- un moyen de circulation forcée réalise une entrée d'air dans le boitier par l'orifice de ventilation sur lequel est relié le conduit;
- un orifice de sortie d'air de ventilation est agencé dans une zone en surpression du boitier lors du roulage.

L'invention se rapporte également à un véhicule automobile comportant au moins un projecteur tel que défini ci-dessus. Le véhicule pouvant avantageusement comporter un système de ventilation apte à fourni une circulation forcée dans l'orifice de ventilation d'au moins un projecteur de ce véhicule.

La présente invention a également comme objet un procédé d'élimination de vapeur d'eau dans un projecteur de véhicule automobile tel que défini ci-dessus. Ce procédé consiste à :
- faire entrer l'air par un orifice de ventilation formé dans une paroi du boitier du projecteur placée dans une zone en dépression lors du roulage;
- faire circuler l'air dans un conduit entre l'orifice d'entrée d'air dans le boitier du projecteur et sa glace, et
- assécher la paroi interne de la glace par l'air sortant du conduit au plus près de la glace.

Dans le présent texte, les orientations utilisées sont les orientations traditionnelles d'un véhicule automobile utilisé dans les conditions standard. En particulier, les localisations « avant », « arrière », « centre », « supérieur » ou « inférieur » du projecteur par rapport au véhicule automobile ou d'éléments à l'intérieur du projecteur s'entendent par rapport au véhicule circulant dans le sens de la marche avant.

### PRÉSENTATION DES FIGURES

D'autres données, caractéristiques et avantages de la présente invention apparaîtront à la lecture de la description non limitée qui suit, en référence aux figures annexées qui représentent, respectivement :
- la figure 1, une vue en coupe schématique d'un exemple de réalisation d'un projecteur selon l'invention avec un conduit indépendant des autres pièces internes au boitier du projecteur;
- la figure 1A, une vue en perspective du bloc de ventilation muni d'un embout de couplage au conduit de la figure 1 ;
- la figure 1B, une vue en perspective partielle d'un exemple de réalisation avec un conduit présentant des coudes de contournement de pièces;
- la figure 1C, une vue agrandie de la figure 1B montrant la liaison entre une extrémité du conduit et un embout d'habillage de boitier présentant une ouverture pour diriger l'air vers la glace;
- la figure 2, une vue en coupe schématique d'un exemple de réalisation d'un projecteur selon l'invention avec un conduit constituant un prolongement d'une pièce interne au boitier et comportant deux sorties ; et
- la figure 3, une vue en coupe schématique d'un exemple de réalisation d'un projecteur selon l'invention équipé d'un conduit dont la section est évolutive entre son entrée et sa sortie, et d'un moyen de circulation forcée relié à l'entrée du conduit.

Sur les figures, des éléments identiques sont repérés par un même signe de référence et renvoient au(x) passage(s) qui le décrive(nt).

### DESCRIPTION DÉTAILLÉE

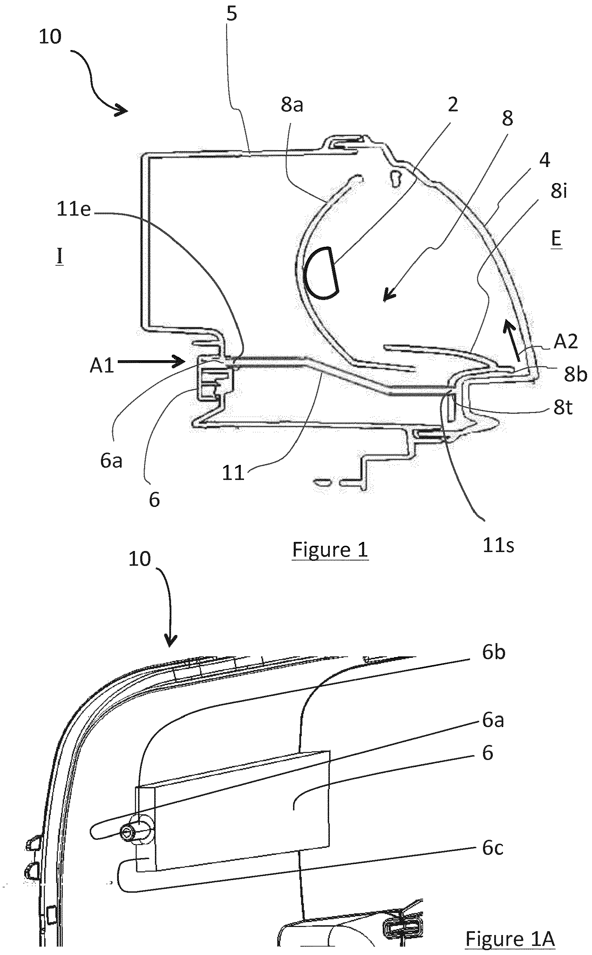

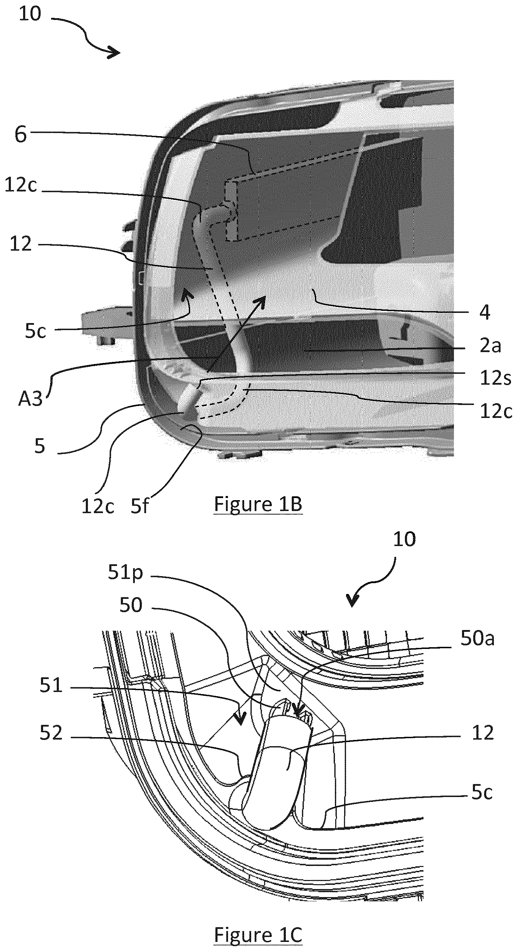

La figure 1 illustre une vue en coupe schématique d'un exemple de réalisation d'un projecteur lumineux avant de véhicule 10 selon l'invention, avec un conduit 11 indépendant de toute autre pièce interne au boitier 5 du projecteur 10. Ce conduit 11 a par exemple un alésage de diamètre compris entre 5 et 7 mm, de préférence 6 mm, et une section constante - de l'ordre de 7 à 10 mm de diamètre, de préférence 8,3 à 8,5 mm, - entre son extrémité d'entrée 11e, couplée à l'orifice 6a d'un bloc de ventilation 6, et sa sortie d'extrémité 11s reliée à une partie inférieure 8i d'un réflecteur 8.

Le bloc de ventilation 6 est placé du côté intérieur « I » du véhicule, donc du côté opposé à la glace 4 qui forme une paroi de fermeture du projecteur 10 donnant sur l'extérieur « E » du véhicule.

Le couplage entre l'extrémité d'entrée 11e du conduit 11 et le bloc 6 est réalisée, comme illustré sur la vue en perspective partielle de la figure 1A, sur un embout cylindrique 6b formée sur un côté 6c du bloc 6 et intégrant l'orifice 6a d'arrivée d'air. Alternativement l'embout peut être tronconique, tronco-cylindrique et en option être équipé d'une bague d'arrêt. Le conduit 11, qui vient s'emmancher sur l'embout 6a, n'a pas été illustré sur la figure 1A afin de mieux visualiser l'embout 6a.

A l'autre bout du conduit 11, l'extrémité 11s est entrée en force ou clipsée dans un orifice 8t pratiqué dans la partie inférieure de réflecteur 8i. Dans ce premier exemple, le conduit 11 est dit « rapporté » sur la partie inférieure de réflecteur 8i.

A l'intérieur du boiter de projecteur 5, une source lumineuse 2 émet de la lumière qui est réfléchie vers la glace 4 par une partie arrière concave 8a du réflecteur 8. La partie inférieure 8i du réflecteur 8 participe également à la réflexion.

En mode désembuage, l'entrée de l'air dans le conduit 11 (flèche A1) passe par le bloc de ventilation 6. Puis le conduit 11 guide l'air pour le diffuser (flèche A2) vers la glace 4, avantageusement au plus près du niveau inférieur de la glace 4, là où la condensation de l'humidité se concentre avec le plus de probabilité en absence de ventilation efficace. Pour ce faire, le conduit 11 est prolongé par la partie inférieure de réflecteur 8i qui guide l'air jusqu'à son bord 8b situé à proximité immédiate de la glace 4.

Alternativement, le conduit 11 peut s'étendre entre la partie inférieure 8i et le boitier 5 jusqu'à un même niveau de proximité de la glace 4. Pour une bonne efficacité, la distance entre l'air ainsi guidé et la glace 4 ne dépasse pas en principe une valeur maximale d'environ 30 mm, une distance inférieure à environ 15 mm étant de préférence respectée. Cet exemple de réalisation permet de changer aisément de conduit tout en conservant une bonne ventilation.

En outre, le conduit 11 présente ici une configuration segmentée en tronçons droits qui s'articulent entre eux pour former des orientations permettant de contourner des pièces agencées dans le projecteur 10, en particulier le réflecteur 8.

Alternativement ou de manière combinée, le conduit présente une configuration en tronçons droits et coudés, comme illustré par les coudes 12c du conduit 12 sur la vue en perspective partielle (en transparence) de la figure 1B. Un habillage interne 5c d'installation de pièces est fixé sur la face interne 5f du boitier 5. Grâce aux coudes 12c, le conduit 12 passe d'une position supérieure depuis son couplage avec le bloc 6 à une position inférieure sous le réflecteur 8 (cf. figures 1 à 3), et sous l'habillage 5c pour contourner une source lumineuse (représentée par son emplacement 2a) située en partie inférieure du projecteur 10 ou le réflecteur 8 (cf. figures 1 à 3). Le conduit 12 est ensuite remonté par un dernier coude 12c pour venir se coupler à l'habillage 5c via une liaison aménagée (cf. figure 1C). Par cette liaison, l'air est dirigé à la sortie 12s du conduit 12 vers le haut pour atteindre la glace 4 (flèche A3).

La liaison entre le conduit 12 et l'habillage 5c est plus précisément illustrée par la vue agrandie de la figure 1C. Cette liaison est réalisée par un embout 50 cylindrique qui présente une ouverte longitudinale 50a. L'embout 50 vient d'une paroi de fond 51p d'un recoin 51 aménagé dans l'habillage 5c pour s'étendre dans ce recoin 51. Et le conduit 12, passant sous l'habillage 5c via un bossage 52, vient s'emmancher partiellement sur cet embout 50 en laissant libre une portion de l'ouverture longitudinale 50a.

Un verrouillage libérable (non représenté) est avantageusement prévu pour stopper le conduit 12 sur l'embout 50 selon une position stable. Alternativement ou en combinaison, l'embout 50 peut être de forme tronconique ou tronco-cylindrique. De plus, la longueur de l'embout 50 peut être ajustée de sorte que le coude 12c forme un arrêt de montage pour maintenir la portion d'extrémité libre de l'ouverture 50a. La liaison ainsi aménagée permet à la fois de fixer l'extrémité du conduit 12 - pour obtenir un positionnement stable - et de diriger l'air à travers l'ouverture 50a en direction de la glace (cf. flèche 3 de la figure 1B).

Le procédé de montage du conduit 12 peut ainsi se décomposer avantageusement selon les quatre étapes suivantes:
- connecter le conduit flexible 12 à l'embout 6b du bloc de ventilation 6 (cf. figures 1A et 1B);
- assembler le réflecteur 8 (ou toute pièce interne à contourner) au boitier 5 avant de passer le conduit flexible 12 sous le réflecteur 8 (respectivement sous la pièce à contourner) (cf. figure 1);
- fixer l'habillage 5c au boitier 5 avant de passer le conduit souple 12 par derrière l'habillage 5c (cf. figure 1B), et
- connecter le conduit flexible 12 à l'embout 50 du recoin 51 de l'habillage 5c (cf. figure 1C).

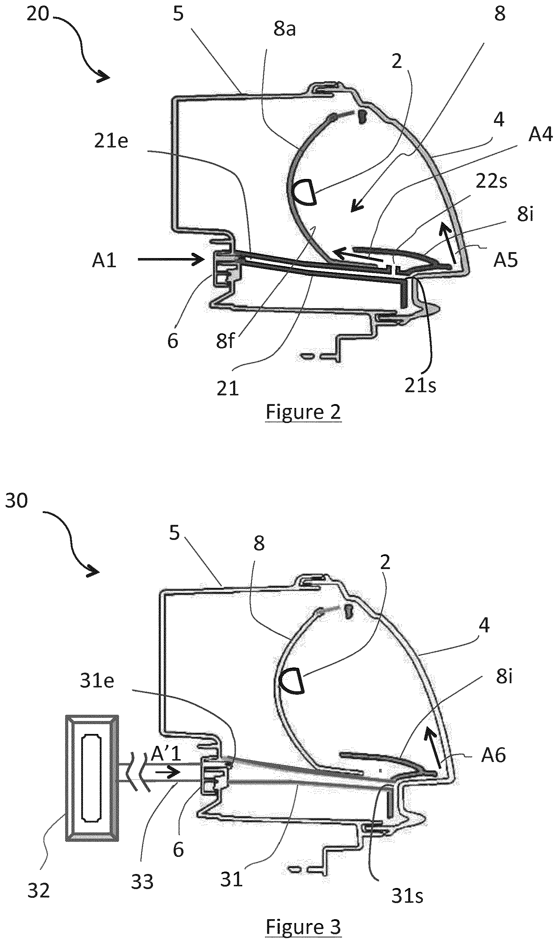

La vue en coupe schématique de la figure 2 présente un autre exemple de réalisation d'un projecteur lumineux 20 selon l'invention. Dans cet exemple, le conduit 21 constitue un prolongement de la partie inférieure 8i du réflecteur 8. Ainsi, la partie inférieure 8i et le conduit 21 forment un seul élément 8i - 21 venant ici de moulage, le conduit est dit « intégré » dans ce deuxième exemple de réalisation. Alternativement, le couplage entre l'extrémité 11s du conduit 11 et la partie inférieure de réflecteur 8i peut être réalisé par collage, soudage thermique, viroles vissées, plots magnétiques, etc.

Hormis cet élément 8i - 21, les autres éléments constituants le projecteur 20 sont identiques à celles du projecteur 10 et portent donc les mêmes références. Plus précisément, le conduit 21 possède une extrémité d'entrée 21e, reliée au bloc 6 de ventilation par couplage sur un embout selon le premier exemple de réalisation (ou alternativement, par soudage thermique, viroles vissées, plots magnétiques, etc.), et deux extrémités de sortie d'air 21s et 22s.

La sortie 22s permet de transmettre de l'air (flèche A4) sous la partie inférieure de déflecteur 8i, en direction de la face interne 8f de la partie arrière concave de déflecteur 8a. L'autre extrémité de sortie 21s du conduit 21 est située plus près du niveau inférieur de la glace 4 (flèche A5) pour permettre un guidage prolongé de l'air au plus près de la glace 4, de manière semblable au guidage de la figure 1 par le bord 8b de partie inférieure de réflecteur 8i. Ce mode de réalisation « intégré » offre l'avantage d'une simplification de montage et d'une ventilation efficace.

La figure 3 montre un autre exemple de réalisation d'un projecteur 30 selon l'invention avec un conduit 31 dont la section est évolutive: cette section est ici décroissante entre son extrémité d'entrée 31e, reliée à l'une des entrées du bloc 6 de ventilation, et son extrémité de sortie 31s.

De plus, dans cet exemple, un ventilateur de climatiseur 32 du véhicule automobile est relié à l'une des entrées du bloc de ventilation 6 par un tuyau souple 33 et fournit une ventilation forcée (flèche A'1) dans l'entrée 31e du conduit 31. Le conduit 31 permet de guider de l'air à partir de son extrémité de sortie 31s selon la flèche A6, de manière équivalente au guidage d'air opéré aux extrémités 11s et 21s des exemples précédents (cf. figures 1 et 2), c'est-à-dire au plus près du bas de la glace 4.

La ventilation forcée peut provenir également d'une centrale de purification et de circulation d'air agencée dans l'habitacle du véhicule. De manière générale, la ventilation peut être fournie par un ventilateur, une turbine, un pulseur entrainé par un moteur électrique ou tout moyen de circulation forcée d'air.

Avantageusement, une telle ventilation forcée permet une ventilation même à l'arrêt du véhicule et avec une intensité de ventilation aussi importante que celle permise par la circulation forcée dans l'habitacle. Alternativement, le projecteur peut intégrer un moyen de circulation forcée d'air et la ventilation est alors créée dans le projecteur.

L'invention n'est pas limitée aux exemples de réalisation décrits et représentés. Elle s'applique à tout type de projecteurs, par exemple aux projecteurs comportant plusieurs sources lumineuses, plusieurs réflecteurs, ou encore un réflecteur à plus de deux parties. Le conduit peut être constitué par un matériau souple formé d'un seul élément ou de plusieurs éléments solidarisés ensemble. Il peut être de section constante ou variable, en particulier décroissante sur une partie de sa longueur.

Par ailleurs, l'orifice d'entrée d'air peut être positionné à travers toute paroi du boîtier, en particulier à travers la paroi inférieure ou la paroi arrière placée du côté intérieur « I » du véhicule, ou encore dans toute zone qui présente une dépression lorsque le véhicule se déplace (par exemple au niveau inférieur du boîtier dans les exemples illustrés). Dans ce dernier cas, l'air provenant de l'extérieur « E » est aspiré directement.

Parallèlement, l'orifice de sortie d'air est agencé dans toute paroi du boîtier, de préférence dans une zone du boîtier qui présente une surpression lors du roulage du véhicule, par exemple à travers la paroi supérieure du boîtier. Le nombre de sorties d'air peut être supérieur à deux afin de désembuer plusieurs pièces internes au projecteur autres que la glace.

Dans le cas d'une ventilation forcée du projecteur, cette ventilation peut être commandée et réglée par le conducteur à partir de son tableau de bord.

Le matériau constitutif des conduits est un matériau souple, en particulier un matériau plastique tel qu'un TPE (élastomère thermoplastique), ou à base de polypropylène, de polyéthylène ou de polychlorure de vinyle (PVC). D'autres matériaux à base métallique formant des tresses ou en enroulage hélicoïdal peuvent être utilisés.

De plus, l'invention s'applique à tout type de véhicule comportant au moins un projecteur que l'on souhaite ventiler.

## Revendications

1. Projecteur (10, 20, 30) destiné à un véhicule automobile, comportant un boitier (5) formant un logement pour au moins une source lumineuse (2) et au moins un réflecteur (8), et une glace (4) fermant le boitier (5), ledit projecteur logeant un système d'aération comportant au moins un orifice de ventilation (6a) d'entrée d'air (A1, A'1), formé dans une paroi du boitier (5), et au moins un conduit (11, 12, 21, 31) agencé de manière à guider l'air depuis l'orifice de ventilation (6a) vers ladite glace (4), le conduit (11, 12, 21, 31) étant constitué d'au moins un matériau flexible, **caractérisé en ce que** la partie inférieure (8i) du réflecteur (8) prolonge le conduit (11, 12, 21, 31) pour guider l'air entre la partie inférieure (8i) du réflecteur (8) et le boitier (5) jusqu'à un bord (8b) de la partie inférieure (8i) du réflecteur (8) ; ledit bord (8b) étant situé à proximité immédiate de la glace (4).

2. Projecteur selon la revendication 1, dans lequel le conduit (11, 12, 21, 31) présente une entrée d'air (11e, 21e, 31e) couplée à l'orifice de ventilation (6a) et au moins une sortie d'air (11s, 8b, 12s, 22s, 31s), au moins une sortie d'air (8b, 12s) étant placée à proximité immédiate de la glace (4).

3. Projecteur selon la revendication précédente, dans lequel une distance entre la sortie d'air à proximité immédiate (8b, 12s) et la glace (4) ne dépasse pas sensiblement 30 mm.

4. Projecteur selon l'une quelconque des revendications 2 ou 3, dans lequel le couplage (6b) entre l'orifice de ventilation (6a) et l'entrée d'air (11e, 21e, 31e) est étanche.

5. Projecteur selon la revendication précédente, dans lequel le couplage étanche est réalisé par emmanchement du conduit (11, 12, 21, 31) sur un embout (6b) formé sur un bloc de ventilation (6).

6. Projecteur selon l'une quelconque des revendications précédentes, dans lequel le conduit (12) présente au moins un coude (12c) de contournement d'une pièce interne au boitier (5).

7. Projecteur selon la revendication précédente, dans lequel, un habillage (5c) étant fixé sur la face interne (5f) du boitier (5), le conduit (12) contourne l'habillage (5c) par un coude (12c).

8. Projecteur selon la revendication précédente, dans lequel le conduit (12) s'emmanche partiellement dans un embout (50) présentant une ouverture (50a) et venant d'une paroi de l'habillage (5c) de sorte que l'air soit dirigé depuis l'ouverture (50a) de l'embout (50) vers la glace (4).

9. Projecteur selon l'une quelconque des revendications précédentes, dans lequel l'orifice (6a) d'entrée d'air de ventilation est agencé dans une zone en dépression du boîtier (5) de sorte que l'air puisse être aspiré lors du roulage du véhicule.

10. Projecteur selon l'une quelconque des revendications précédentes, dans lequel le conduit (21) est intégré en prolongement d'une pièce du boitier (5).

11. Projecteur selon l'une quelconque des revendications précédentes, dans lequel la section du conduit (31) est au moins en partie décroissante le long du conduit (31).

12. Projecteur selon l'une quelconque des revendications précédentes, dans lequel un moyen de circulation forcée (32) réalise une entrée d'air (A'1) dans le boitier (5) par l'orifice de ventilation (6a) sur lequel est couplé le conduit (31).

13. Véhicule automobile, **caractérisé en ce qu'**il comporte au moins un projecteur (10, 20, 30) tel que défini selon l'une quelconque des revendications précédentes.

14. Véhicule automobile, **caractérisé en ce qu'**il comporte un système de ventilation apte à fournir une circulation forcée dans l'orifice de ventilation (6a) d'au moins un projecteur (10, 20) selon l'une quelconque des revendications 1 à 12.

## Patentansprüche

1. Scheinwerfer (10, 20, 30), der für ein Kraftfahrzeug bestimmt ist, umfassend ein Gehäuse (5), das eine Aufnahme für mindestens eine Lichtquelle (2) und mindestens einen Rückstrahler (8) bildet, umfassend eine Scheibe (4), die das Gehäuse (5) verschließt, wobei der Scheinwerfer ein Belüftungssystem beinhaltet, umfassend mindestens eine Belüftungsöffnung (6a) für den Lufteintritt (A1, A'1), die in einer Wand des Gehäuses (5) ausgebildet ist, und mindestens eine Leitung (11, 12, 21, 31), die dazu vorgesehen ist, die Luft von der Belüftungsöffnung (6a) zu der Scheibe (4) zu leiten, wobei die Leitung (11, 12, 21, 31) aus mindestens einem flexiblen Material besteht, **dadurch gekennzeichnet, dass** der untere Teil (8i) des Rückstrahlers (8) die Leitung (11, 12, 21, 31) verlängert, um die Luft zwischen dem unteren Teil (8i) des Rückstrahlers (8) und dem Gehäuse (5) bis zu einem Rand (8b) des unteren Teils (8i) des Rückstrahlers (8) zu leiten; wobei sich der Rand (8b) in unmittelbarer Nähe der Scheibe (4) befindet.

2. Scheinwerfer nach Anspruch 1, bei dem die Leitung (11, 12, 21, 31) einen Lufteintritt (11e, 21e, 31e), der mit der Belüftungsöffnung (6a) gekoppelt ist, und mindestens einen Luftaustritt (11s, 8b, 12s, 22s, 31s) aufweist, wobei mindestens ein Luftaustritt (8b, 12s) in unmittelbarer Nähe der Scheibe (4) angeordnet ist.

3. Scheinwerfer nach dem vorhergehenden Anspruch, bei dem ein Abstand zwischen dem Luftaustritt in unmittelbarer Nähe (8b, 12s) und der Scheibe (4) im Wesentlichen 30 mm nicht überschreitet.

4. Scheinwerfer nach einem der Ansprüche 2 oder 3, bei dem die Kopplung (6b) zwischen der Belüftungsöffnung (6a) und dem Lufteintritt (11e, 21e, 31e) dicht ist.

5. Scheinwerfer nach dem vorhergehenden Anspruch, bei dem die dichte Kopplung durch Aufstecken der Leitung (11, 12, 21, 31) auf einen auf einem Belüftungsblock (6) ausgebildeten Ansatz (6b) verwirklicht ist.

6. Scheinwerfer nach einem der vorhergehenden Ansprüche, bei dem die Leitung (12) mindestens einen Knick (12c) zur Umgehung eines Teils innerhalb des Gehäuses (5) aufweist.

7. Scheinwerfer nach dem vorhergehenden Anspruch, bei dem, wobei eine Verkleidung (5c) auf der Innenseite (5f) des Gehäuses (5) befestigt ist, die Leitung (12) die Verkleidung (5c) durch einen Knick (12c) umgeht.

8. Scheinwerfer nach dem vorhergehenden Anspruch, bei dem die Leitung (12) teilweise in einen Ansatz (50) eingesteckt ist, der eine Öffnung (50a) aufweist und von einer Wand der Verkleidung (5c) kommt, so dass die Luft von der Öffnung (50a) des Ansatzes (50) zu der Scheibe (4) gelenkt wird.

9. Scheinwerfer nach einem der vorhergehenden Ansprüche, bei dem die Öffnung (6a) für den Belüftungslufteintritt in einer Unterdruckzone des Gehäuses (5) angeordnet ist, so dass die Luft beim Rollen des Fahrzeugs angesaugt werden kann.

10. Scheinwerfer nach einem der vorhergehenden Ansprüche, bei dem die Leitung (21) in der Verlängerung eines Teils des Gehäuses (5) integriert ist.

11. Scheinwerfer nach einem der vorhergehenden Ansprüche, bei dem der Querschnitt der Leitung (31) zumindest teilweise entlang der Leitung (31) abnehmend ist.

12. Scheinwerfer nach einem der vorhergehenden Ansprüche, bei dem ein Zwangszirkulationsmittel (32) einen Lufteintritt (A'1) in das Gehäuse (5) durch die Belüftungsöffnung (6a), an die die Leitung (31) gekoppelt ist, verwirklicht.

13. Kraftfahrzeug, **dadurch gekennzeichnet, dass** es mindestens einen Scheinwerfer (10, 20, 30), wie in einem der vorhergehenden Ansprüche definiert, umfasst.

14. Kraftfahrzeug, **dadurch gekennzeichnet, dass** es ein Belüftungssystem umfasst, das geeignet ist, eine Zwangszirkulation in die Belüftungsöffnung (6a) mindestens eines Scheinwerfers (10, 20) nach einem der Ansprüche 1 bis 12 zu liefern.

## Claims

1. A headlight (10, 20, 30) intended for a motor vehicle, comprising a casing (5) forming a housing for at least one light source (2) and at least one reflector (8), and a glass (4) closing the casing (5), said headlight housing an aeration system comprising at least one ventilation port (6a) for the entry of air (A1, A'1), formed in a wall of the casing (5), and at least one duct (11, 12, 21, 31) arranged so as to guide the air from the ventilation port (6a) towards said glass (4), the duct (11, 12, 21, 31) being constituted by at least one flexible material, **characterized in that** the lower part (8i) of the reflector (8) extends the duct (11, 12, 21, 31) for guiding the air between the lower part (8i) of the reflector (8) and the casing (5) up to an edge (8b) of the lower part (8i) of the reflector (8); said edge (8b) being situated in the immediate proximity of the glass (4).

2. The headlight according to claim 1, in which the duct (11, 12, 21, 31) has an air inlet (11e, 21e, 31e) coupled to the ventilation port (6a) and at least one air outlet (11s, 8b, 12s, 22s, 31s), at least one air outlet (8b, 12s) being placed in the immediate proximity of the glass (4).

3. The headlight according to the preceding claim, in which a distance between the air outlet in the immediate proximity (8b, 12s) and the glass (4) does not exceed substantially 30 mm.

4. The headlight according to any one of claims 2 or 3, in which the coupling (6b) between the ventilation port (6a) and the air inlet (11e, 21e, 31e) is sealed.

5. The headlight according to the preceding claim, in which the sealed coupling is realized by fitting of the duct (11, 12, 21, 31) on an end piece (6b) formed on a ventilation block (6).

6. The headlight according to any one of the preceding claims, in which the duct (12) has at least one bend (12c) for bypassing a part internal to the casing (5).

7. The headlight according to the preceding claim, in which, with a trim (5c) being fixed on the internal face (5f) of the casing (5), the duct (12) bypasses the trim (5c) by a bend (12c).

8. The headlight according to the preceding claim, in which the duct (12) partially fits in an end piece (50) having an opening (50a) and coming from a wall of the trim (5c) such that the air is directed from the opening (50a) of the end piece (50) towards the glass (4) .

9. The headlight according to any one of the preceding claims, in which the inlet port (6a) for ventilation air is arranged in a depression zone of the casing (5) such that the air can be drawn in while the vehicle is travelling.

10. The headlight according to any one of the preceding claims, in which the duct (21) is integrated in extension of a piece of the casing (5).

11. The headlight according to any one of the preceding claims, in which the section of the duct (31) is at least partially decreasing along the duct (31).

12. The headlight according to any one of the preceding claims, in which a forced circulation means (32) provides an air entry (A'1) in the casing (5) through the ventilation port (6a) on which the duct (31) is coupled.

13. A motor vehicle, **characterized in that** it comprises at least one headlight (10, 20, 30) as defined according to any one of the preceding claims.

14. A motor vehicle, **characterized in that** it comprises a ventilation system able to supply a forced circulation in the ventilation port (6a) of at least one headlight (10, 20) according to any one of claims 1 to 12.
